# EUROPÄISCHE PATENTSCHRIFT

(11) **EP 1 386 569 B1**
(45) Veröffentlichungstag und Bekanntmachung des Hinweises auf die Patenterteilung: **17.05.2006**
(21) Anmeldenummer: 03017241.5
(22) Anmeldetag: 30.07.2003
(51) Int. Cl.: A47J 37/04, A47J 36/38

(54) **Dönergrill mit Filteranlage**
Doner grill with filter system
Gril a doner avec un systéme de filtre

(30) Priorität: 02.08.2002 DE 10235603
(43) Veröffentlichungstag der Anmeldung: 04.02.2004
(73) Patentinhaber: Beck, Bernd, D-35794 Mengerskirchen (DE); Beck, Michael, D-35794 Mengerskirchen (DE); Beck, Volker, D-65549 Limburg (DE)
(72) Erfinder: Beck, Bernd, D-35794 Mengerskirchen (DE); Beck, Michael, D-35794 Mengerskirchen (DE); Beck, Volker, D-65549 Limburg (DE)
(74) Vertreter: Weber, Dieter

(56) Entgegenhaltungen:
- EP-A- 0 298 000
- EP-A- 0 885 583
- WO-A-00/01285
- GB-A- 2 354 156

## Beschreibung

Die vorliegende Erfindung betrifft eine Filteranlage für einen Dönergrill und insbesondere einen Dönergrill mit einer Filteranlage.

Auf dem Gebiet der Gastronomie ist in den letzten Jahren der sogenannte "Döner Kebab" zum beliebtesten Fast-Food-Gericht avanciert. Zur Herstellung von "Döner Kebab", was in deutscher Übersetzung "drehender Braten" bedeutet, wird Hammelfleisch und Hackfleisch an einem vertikalen Spieß befestigt und gebraten. Serviert wird der "Döner Kebab" meist in einer Brottasche, die aus einem speziellem Fladenbrot hergestellt worden ist. Dabei werden dünne Streifen des gebratenen Fleischs zusammen mit verschiedenen Salaten und gegebenenfalls mit Joghurt garniert in die Brottasche eingelegt. Bekannt ist auch die griechische Variante mit dem Namen "Gyros", bei der auch andere Fleischsorten verwendet werden, die aber sonst dem "Döner Kebab" ähnelt. Auch wenn im folgenden nur von "Dönergrill" die Rede ist, wird darunter selbstverständlich auch die Variante des "Gyrosgrills" verstanden.

Trotz dieser großen Beliebtheit hat dieses Gericht bislang kaum Einzug in die mobile Gastronomie gefunden. Während es beispielsweise bei Messen und anderen Großveranstaltungen durchaus üblich ist, verschiedene Arten von Fast Food, wie z. B. Bratwürste, Hamburger oder Pommes Frites, in mobilen Verkaufsständen anzubieten, fällt das Angebot an "Döner Kebab" eher gering aus.

Dies hat mehrere Gründe. Zum einen liegt dies daran, daß herkömmliche Dönergrillvorrichtungen kein geeignetes Geruchsabzugssystem haben, so daß, insbesondere beim Anbieten in geschlossenen Räumen, wie z. B. in Messehallen, die Dönerzubereitung im Umkreis von etlichen Metern zu einer erheblichen Geruchsbelästigung führt. Zum anderen erlaubt die notwendige senkrechte Anordnung einer Heizvorrichtung, die meist aus Infrarotgasstrahlem oder Infrarotheizkörpern besteht, bei bekannten Dönergrillvorrichtungen keine Integration des Dönergrills in Verkaufstheken. Dies liegt im wesentlichen daran, daß aufgrund der beträchtlichen Wärmeentwicklung der Heizvorrichtung der Dönergrill im allgemeinen nicht mit dem Rücken, d.h. mit der dem sich drehenden Fleisch abgewandten Seite der Heizvorrichtung in Richtung der Laufkundschaft positioniert werden kann. Die Rückseite der Heizvorrichtung erwärmt sich nämlich im Betrieb derart stark - die optimale Dönergrilltemperatur liegt bei etwa 900°C -, daß ohne ausreichenden Sicherheitsabstand Verbrennungsgefahren für die Kundschaft bestehen. Diese können zwar durch entsprechend dimensionierte Dämm- bzw. Isolationsplatten beseitigt werden, dies führt jedoch zu einer erheblichen Gewichtserhöhung des Dönergrills und einem weniger kompakten Aufbau, so daß ein mobiler Einsatz und insbesondere eine Integration in mobile Verkaufstheken nahezu ausgeschlossen ist.

In der WO 00/01285 ist eine Vorrichtung für das automatische Braten von Frikadellen beschrieben. Hier wird der entstehende Bratdunst oberhalb eines Speisenzubereitungsraums von einer Absaugeinrichtung abgesaugt.

Die EP 0 885 583 beschreibt einen Verkaufsautomaten für Bratkartoffeln. Zur Reinigung des entstehenden Dunstes wird eine mehrstufige Filtereinrichtung einschließlich eines Wärmetauschers verwendet.

Es ist daher Aufgabe der vorliegenden Erfindung, eine Filteranlage für einen Dönergrill zur Verfügung zu stellen, die die Mobilität des Dönergrills nicht einschränkt und zugleich eine zu starke Erwärmung der Rückseite der Heizvorrichtung wirksam verhindert. Zudem ist es Aufgabe der Erfindung, einen Dönergrill mit solch einer Filteranlage zur Verfügung zu stellen.

Erfindungsgemäß wird diese Aufgabe durch eine Filteranlage mit einer Bodenplatte, einer Rückwand und einer Haube, die einen Speisenzubereitungsraum zur Aufnahme eines Dönergrills einschließt, sowie einer mit der Haube über ein Filtersystem verbundenen Absaugeinrichtung gelöst, wobei die Absaugeinrichtung derart angeordnet ist, daß die über die Haube angesaugte Luft an der dem Speisenzubereitungsraum abgewandten Seite der Rückwand vorbeigeführt wird.

Die an der Rückwand vorbeigeführte Luft sorgt für einen erheblichen Wärmeabtransport, so daß die Rückwand bei weitem nicht so stark erwärmt wird, wie dies ohne entsprechende Luftführung der Fall wäre. Durch die erfindungsgemäße Filteranlage wird erstmalig der ohnehin aufgrund des Filtersystems vorhandene Luftstrom für Kühlungszwecke genutzt. Der Luftstrom dient somit nicht nur dem Abtransport von Kochdunst, sondern zugleich auch dem Abtransport von Wärme.

In einer besonders bevorzugten Ausführungsform ist an der dem Speisenzubereitungsraum abgewandten Seite der Rückwand ein Kühlkanal angeordnet, über den die Absaugeinrichtung mit der Haube verbunden ist. Der Kühlkanal ist dabei mit Vorteil derart konfiguriert, daß er im wesentlichen die komplette rückseitige Fläche der Rückwand abdeckt. Dabei ist es sowohl möglich einen Kanal zu wählen, dessen Breite im wesentlichen der Breite der Rückwand entspricht, als auch einen schmaleren Kanal zu wählen, der beispielsweise in einer Zickzack-Anordnung an der Rückseite der Rückwand entlanggeführt wird. Auch kann die Rückwand doppelwandig ausgeführt sein, so daß der Luftstrom durch die doppelwandige Rückwand geleitet wird.

Der erfindungsgemäße Kühlkanal hat mehrere Vorteile. Zum einen kann dadurch eine sehr gezielte Führung des Luftstromes erreicht werden und zum anderen ist gewährleistet, daß Personen, die sich in unmittelbarer Umgebung des Dönergrills aufhalten, dem Luftstrom nicht ausgesetzt sind.

In einer weiteren bevorzugten Ausführungsform ist vorgesehen, daß die Absaugeinrichtung unterhalb des Speisenzubereitungsraums angeordnet ist. Die Luft wird somit über die Haube eingesaugt und dann an der Rückwand durch den Kühlkanal bis zur Absaugeinrichtung geleitet.

Dabei ist der Kühlkanal vorzugsweise so ausgebildet, daß die Luft im wesentlichen ausschließlich in senkrechter Richtung zwischen Haube und Absaugeinrichtung geführt wird. Bei der eingangs beschriebenen Zick-Zack-Anordnung des Kühlkanals, bei der.die Luft somit nicht im wesentlichen ausschließlich in senkrechter Richtung geführt wird, muß nämlich die Strömungsgeschwindigkeit deutlich höher sein, um die selbe Kühlleistung zu erzielen.

Grundsätzlich ist der Kühleffekt dann am größten, wenn die Strömungsgeschwindigkeit im Kanal möglichst hoch ist. Es ist jedoch zu beachten, daß eine optimale Filterwirkung des Filtersystems bei möglichst kleinen Strömungsgeschwindigkeiten vorliegt. Mit Vorteil wird daher im Filtersystem eine geringe Strömungsgeschwindigkeit verwirklicht, während im Kanal eine höhere Strömungsgeschwindigkeit verwirklicht wird. Da die Strömungsgeschwindigkeit der Luft beim Hindurchtreten durch das Filtersystem deutlich verlangsamt wird, sollten sich im Kühlkanal daher vorzugsweise keine Filter befinden.

Bei einer besonders bevorzugten Ausführungsform ist vorgesehen, daß auch das Geruchsfiltersystem unterhalb des Speisenzubereitungsraums angeordnet ist. Gegebenenfalls kann die Haube einen Flammschutzfilter aufweisen, das eigentliche Geruchsfiltersystem befindet sich jedoch vorzugsweise unterhalb des Speisenzubereitungsraums.

In einer besonders bevorzugten Ausführungsform ist vorgesehen, daß sich Absaugeinrichtung und Filtersystem in einem im wesentlichen geschlossenen Funktionsraum unterhalb des Speisenzubereitungsraums befinden. Mit Vorteil ist der Funktionsraum leicht zugänglich, so daß die Absaugeinrichtung gewartet werden kann und das Filtersystem in regelmäßigen Intervallen gereinigt werden kann.

Die erfindungsgemäße Filteranlage ist deutlich kompakter als vergleichbare Filteranlagen, so daß diese mit Vorteil fahrbar ausgestaltet ist. Die Fahrbarkeit kann beispielsweise durch das Vorsehen von Rollen erreicht werden. Durch das erfindungsgemäße System können handelsübliche Dönergrills einfach in die erfindungsgemäße Filteranlage in den Speisenzubereitungsraum eingestellt werden und nahezu an jedem beliebigen Ort betrieben werden. Eine Geruchsbelästigung benachbarter Personen findet nicht statt. Zudem sind keine zusätzlichen Sicherheitsmaßnahmen, insbesondere kein aufwendiger Berührungsschutz erforderlich.

In einer weiteren besonders zweckmäßigen Ausführungsform ist vorgesehen, daß Funktionsraum und Rückwand einschließlich Kühlkanal lösbar aneinander befestigt sind. Dadurch kann die Filteranlage leicht für den Transport zerlegt werden. Darüber hinaus ist eine leichte Reinigung des Kühlkanals möglich, da er nach Abnahme der Rückwand von dem Funktionsraum ohne weiteres zugänglich ist. Die lösbare Verbindung kann mit Hilfe von beliebigen Befestigungsmitteln erfolgen.

Alternativ oder in Kombination sind mit Vorteil Haube und Rückwand einschließlich Kühlkanal lösbar aneinander befestigt sind.

In einer weiteren besonders bevorzugten Ausführungsform ist in der Filteranlage zusätzlich eine Schublade vorgesehen, die z. B. zur Aufnahme von Fladenbrot dienen kann.

Wie bereits beschrieben wurde, können handelsübliche Dönergrillgeräte in die erfindungsgemäße Filteranlage integriert werden. Es ist jedoch auch möglich, einen Dönergrill mit einer Heizvorrichtung, die eine im wesentlichen senkrecht angeordnete erhitzbare Fläche aufweist, und einer zu der Heizeinrichtung benachbart angeordnete Einrichtung zur Aufnahme von Grillgut integral mit der Filteranlage zu fertigen:

Weitere Vorteile, Merkmale und Anwendungsmöglichkeiten der vorliegenden Erfindung werden deutlich anhand der folgenden Beschreibung einer bevorzugten Ausführungsform sowie der dazugehörigen Figuren. Es zeigen:
- Figur 1: eine Vorderansicht einer erfindungsgemäßen Filteranlage,
- Figur 2: eine Ansicht von oben auf die erfindungsgemäße Filteranlage von Figur 1,
- Figur 3: eine Seitenansicht der Filteranlage von Figur 1 und
- Figur 4: eine seitliche Schnittansicht durch die erfindungsgemäße Filteranlage von Figur 1.

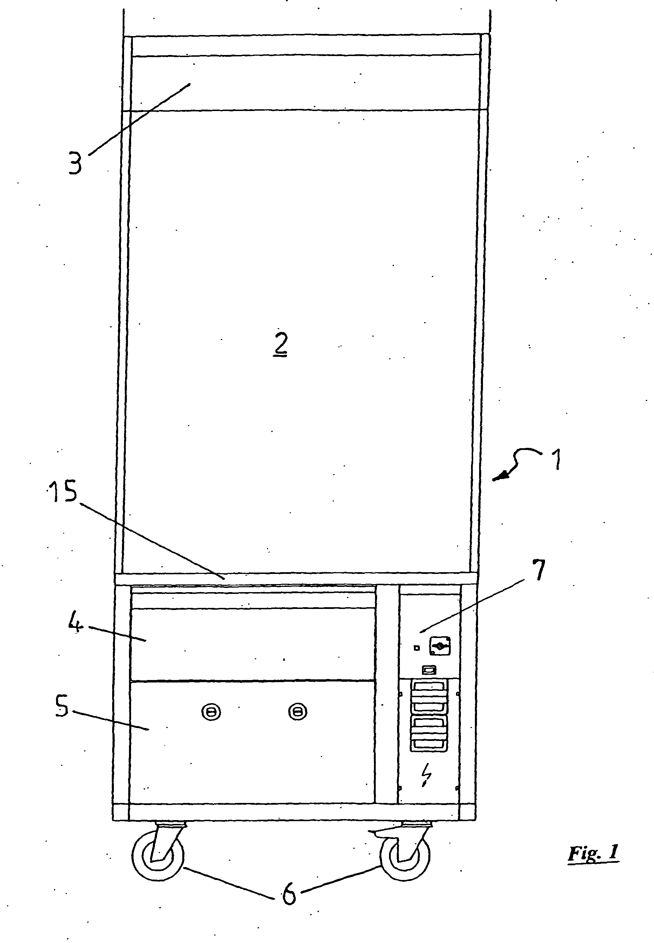

In Figur 1 ist eine Draufsicht auf eine erfindungsgemäße Ausführungsform der Filteranlage 1. Die Filteranlage weist eine Haube 3, eine Rückwand 2 sowie eine Bodenwand 15 auf, die einen Speisenzubereitungsraum 14 umgeben. Der Speisenzubereitungsraum 14 ist für die Aufnahme eines Dönergrills vorgesehen. Der Abstand zwischen Bodenwand 15 und Haube 3 beträgt daher vorzugsweise zwischen 90 und 130 cm, besonders bevorzugt zwischen 110 und 120 cm. Dadurch wird einerseits eine gewisse Flexibilität bei der Verwendung von verschiedenen Dönergrills mit unterschiedlichen Höhen gewährleistet. Zum anderen ist der Abstand zwischen Bodenwand 15 und Haube 3 auch nicht zu groß, so daß selbst bei der Verwendung von Dönergrills kleiner Höhe noch eine wirksame Geruchs- und Dunstabsaugung erfolgen kann.

Handelsübliche Dönergrills weisen im allgemeinen eine Heizvorrichtung, die eine im wesentlichen senkrecht angeordnete erhitzbare Fläche besitzt und eine Einrichtung zur Aufnahme von Grillgut, in der Regel in Form eines drehbaren Spießes, auf. Die erhitzbare Fläche wird meist durch Infrarotgasstrahler und in neueren Modellen auch durch eine Ceranheizfläche mit Infrarotheizkörpern gebildet.

Bei der Integration des Dönergrills in die Filteranlage wird die Heizvorrichtung in unmittelbarer Nähe zu der Rückwand 2 angeordnet.

Unterhalb der Bodenplatte 15 befindet sich eine Schublade 4, die beispielsweise zur Aufnahme von Brot dienen kann. Unterhalb der Schublade 4 ist der Funktionsraum angeordnet, auf den über eine Klappe 5 zugegriffen werden kann. Rechts von der Schublade 4 und dem Funktionsraum 5 ist eine Schalterblende 7 vorgesehen, die einen Ein-/Aus-Schalter sowie Steckdosen zur Verfügung stellt. Es versteht sich, daß die Brotschublade auch unterhalb des Funktionsraumes vorgesehen werden kann. Falls gewünscht kann auch ein Raum zur Aufnahme eines Gasvorratsbehälters in die Filteranlage integriert werden, so daß bei der Verwendung eines Dönergrill mit Infrarotgasstrahlern keine Gasflaschen auf dem Boden abgestellt werden müssen.

Die ganze Filtereinheit ist auf Rollen 6 fahrbar angeordnet.

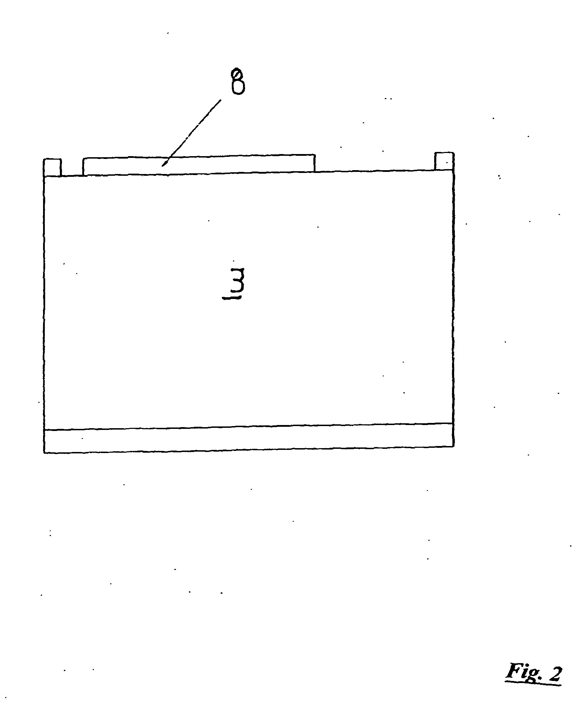

In Figur 2 ist eine Ansicht von oben auf die erfindungsgemäße Filteranlage gezeigt. Man erkennt die Haube 3 sowie hinter der Rückwand 2 den Kühlkanal 8.

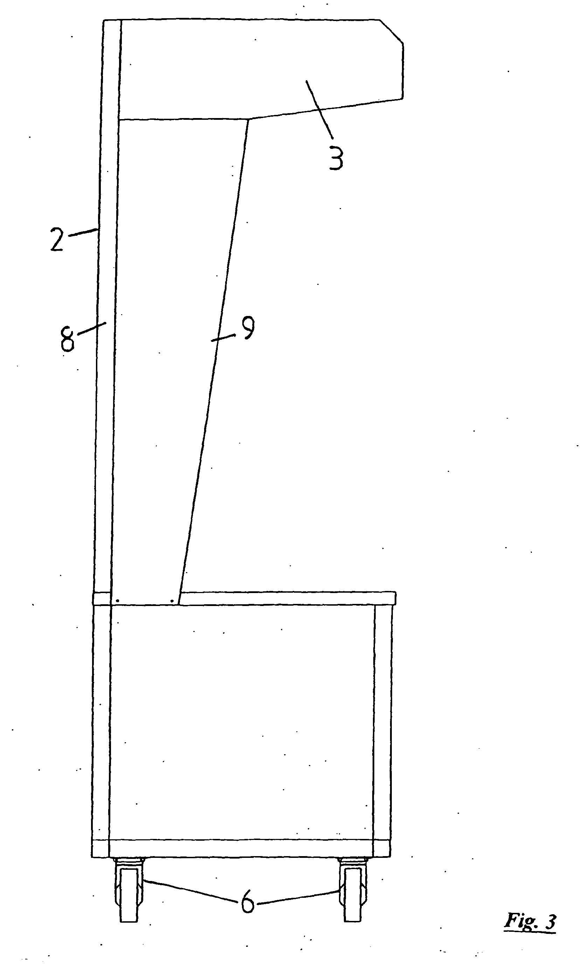

In Figur 3 ist eine Seitenansicht der Filteranlage 1 gezeigt. Man sieht, daß der Speisenzubereitungsraum 14 hier nicht nur von der Haube 3, der Rückwand 2 und der Bodenwand 15 umgeben ist, sondern daß zusätzlich seitliche Wangen 9 vorgesehen sind.

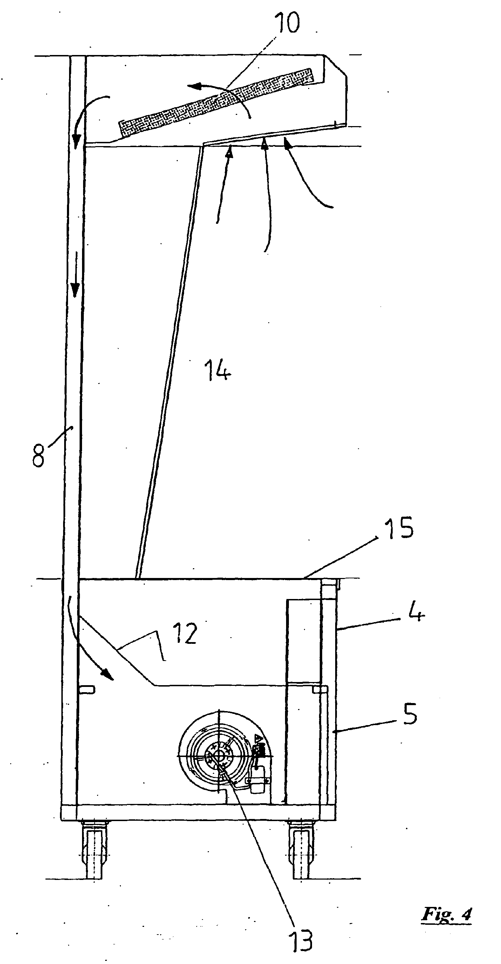

Die Funktionsweise der Filteranlage wird anhand Figur 4, die einen seitlichen Querschnitt durch die erfindungsgemäße Filteranlage 1 zeigt, deutlich. Man erkennt, daß in der Haube 3 ein Flammschutzfilter 10 angeordnet ist. Alle weiteren Filter sind in die Absaugeinrichtung 13 integriert. Im Betrieb wird möglicherweise entstehender Kochdunst und Gerüche aus dem Speisenzubereitungsraum 14 über die Haube 3, die einen Fangraum bildend oberhalb des Speisenzubereitungsraum 14 angeordnet ist, abgesaugt. Die abgesaugte Luft wird an der Rückseite der Rückwand 2 durch den Kühlkanal 8 nach unten zu der Abzugseinrichtung 13 geführt, wie durch die Pfeile in Figur 4 angedeutet ist.

Durch die erfindungsgemäße Führung des Luftstroms an der Außenseite der Rückwand 2 entlang, wird sichergestellt, daß die Rückwand 2 gekühlt wird. Es hat sich nämlich herausgestellt, daß mit Hilfe der aus dem Speisenzubereitungsraum 14 abgesaugten Luft eine erhebliche Wärmemenge von der Rückwand 2 der Filtereinheit weggeführt werden kann. Dadurch ist es möglich, die Filtereinheit beispielsweise auch in die Mitte eines Raumes zu stellen, so daß Passanten bzw. Kunden bis an die Rückseite der Rückwand 2 gelangen können. Während des Betriebes kann die Rückseite der Rückwand 2 gefahrlos angefaßt werden, da eine zu starke Aufheizung wirksam verhindert wird. Dadurch kann eine wesentlich kompakterer Aufbau verwirklicht werden, so daß die Filteranlage auch in bestehende mobile Verkaufstheken leicht integriert werden kann.

Die Absaugeinrichtung 13 ist zusammen mit dem Filtersystem innerhalb des Funktionsraumes 5 angeordnet, in den die Luft mittels des Leitbleches 12 eingeleitet wird. Nach der Filterung kann die Luft durch eine Bodenöffnung nach außen geführt werden.

Mit Hilfe der erfindungsgemäßen Filteranlage ist es möglich, nahezu an jedem beliebigen Ort ein Dönergericht zuzubereiten. Es besteht lediglich die Notwendigkeit, einen Stromanschluß zur Verfügung zu stellen. Es ist kein Kanalsystem oder zusätzlicher Lüfter für die Abluft erforderlich. Die erfindungsgemäße Filteranlage erlaubt den Betrieb auch in geschlossenen Räumen, da jegliche Kochdünste oder -gerüche wirksam abgesaugt werden.

## Patentansprüche

1. Filteranlage (1) mit einer Bodenplatte (15), einer Rückwand (2) und einer Haube (3), die einen Speisenzubereitungsraum (14) zur Aufnahme eines Dönergrills umgeben, sowie einer mit der Haube (3) über ein Filtersystem (13) verbundenen Absaugeinrichtung (13), **dadurch gekennzeichnet, daß** die Absaugeinrichtung (13) derart angeordnet ist, daß die über die Haube (3) angesaugte Luft an der dem Speisenzubereitungsraum (14) abgewandten Seite der Rückwand (2) vorbeigeführt wird.

2. Filteranlage nach Anspruch 1, **dadurch gekennzeichnet, daß** an der dem Speisenzubereitungsraum (14) abgewandten Seite der Rückwand (2) ein Kühlkanal (8) angeordnet ist, über den die Absaugeinrichtung (13) mit der Haube (3) verbunden ist.

3. Filteranlage nach Anspruch 2, **dadurch gekennzeichnet, daß** die Absaugeinrichtung (13) unterhalb des Speisenzubereitungsraums (14) angeordnet ist.

4. Filteranlage nach Anspruch 2 oder 3, **dadurch gekennzeichnet, daß** der Kühlkanal (8) so angeordnet ist, daß die Luft im wesentlichen ausschließlich in senkrechter Richtung zwischen Haube (3) und Absaugeinrichtung (13) geführt wird.

5. Filteranlage nach Anspruch 3 oder 4, **dadurch gekennzeichnet, daß** das Filtersystem (13) unterhalb des Speisenzubereitungsraums (14) angeordnet ist.

6. Filteranlage nach Anspruch 5, **dadurch gekennzeichnet, daß** Absaugeinrichtung und Filtersystem (13) in einem im wesentlichen geschlossenen Funktionsraum (5) angeordnet sind.

7. Filteranlage nach einem der Ansprüche 1 bis 6, **dadurch gekennzeichnet, daß** eine Schublade (4), z. B. zur Aufnahme von Brot, vorgesehen ist.

8. Filteranlage nach einem der Ansprüche 1 bis 7, **dadurch gekennzeichnet, daß** die Haube (3) einen Flammschutzfilter (10) aufweist.

9. Filteranlage nach einem der Ansprüche 1 bis 8, **dadurch gekennzeichnet, daß** die Filteranlage fahrbar ist.

10. Filteranlage nach einem der Ansprüche 6 bis 9, **dadurch gekennzeichnet, daß** Funktionsraum (5) und Rückwand (2) einschließlich Kühlkanal (8) lösbar aneinander befestigt sind.

11. Filteranlage nach einem der Ansprüche 6 bis 10, **dadurch gekennzeichnet, daß** Haube (3) und Rückwand (2) einschließlich Kühlkanal (8) lösbar aneinander befestigt sind.

12. Dönergrill mit einer Heizvorrichtung, die eine im wesentlichen senkrecht angeordnete erhitzbare Fläche aufweist, und einer zu der Heizeinrichtung benachbart angeordneten Einrichtung zur Aufnahme von Grillgut, **dadurch gekennzeichnet, daß** der Dönergrill eine Filteranlage nach einem der Ansprüche 1 bis 11 aufweist.

13. Verfahren zum Filtern von Koch- bzw. Bratdunst, der beim Erwärmen oder Braten von Speisen mittels einer Heizeinrichtung entsteht, bei dem der Koch- und Bratdunst mit Hilfe einer Absaugeinrichtung durch ein Filtersystem geleitet wird, **dadurch gekennzeichnet, daß** eine von der Heizeinrichtung erwärmte Fläche mit Hilfe des abgesaugten Luftstroms gekühlt wird.

## Claims

1. A filter installation (1) comprising a base plate (15), a rear wall (2) and a hood (3) which enclose a food preparation space (14) for receiving a doner grill, and a suction extraction device (13) connected to the hood (3) by way of a filter system (13), **characterised in that** the suction extraction device (13) is so arranged that the air sucked in by way of the hood (3) is guided past the side of the rear wall (2), that is away from the food preparation space (14).

2. A filter installation according to claim 1 **characterised in that** arranged at the side of the rear wall (2), that is away from the food preparation space (14) is a cooling passage (8) by way of which the suction extraction device (13) is connected to the hood (3).

3. A filter installation according to claim 2 **characterised in that** the suction extraction device (13) is arranged beneath the food preparation space (14).

4. A filter installation according to claim 2 or claim 3 **characterised in that** the cooling passage (8) is so arranged that the air is guided substantially exclusively in a perpendicular direction between the hood (3) and the suction extraction device (13).

5. A filter installation according to claim 3 or claim 4 **characterised in that** the filter system (13) is arranged beneath the food preparation space (14).

6. A filter installation according to claim 5 **characterised in that** the suction extraction device and the filter system (13) are arranged in a substantially closed functional space (5).

7. A filter installation according to one of claims 1 to 6 **characterised in that** there is provided a drawer (4), for example for receiving bread.

8. A filter installation according to one of claims 1 to 7 **characterised in that** the hood (3) has a flame protection filter (10).

9. A filter installation according to one of claims 1 to 8 **characterised in that** the filter installation is mobile.

10. A filter installation according to one of claims 6 to 9 **characterised in that** the functional space (5) and the rear wall (2) including the cooling passage (8) are releasably fixed to each other.

11. A filter installation according to one of claims 6 to 10 **characterised in that** the hood (3) and the rear wall (2) including the cooling passage (8) are releasably fixed to each other.

12. A doner grill comprising a heating apparatus having a substantially perpendicularly arranged heatable surface and a device arranged adjacent to the heating apparatus for receiving grill material, **characterised in that** the doner grill has a filter installation according to one of claims 1 to 11.

13. A method of filtering cooking or frying fumes which are produced upon heating or frying food by means of a heating apparatus, in which the cooking and frying fumes are passed through a filter system by means of a suction extraction device, **characterised in that** a surface heated by the heating apparatus is cooled by means of the air flow which is sucked away.

## Revendications

1. Installation de filtrage (1) comportant une plaque de fond (15), une paroi arrière (2) et un capot (3), lesquels entourent un espace de préparation alimentaire (14) destiné à recevoir un gril de Doner Kebab, ainsi qu'un dispositif d'aspiration (13) qui est relié au capot (3) par un système de filtrage (13), **caractérisée en ce que** le dispositif d'aspiration (13) est disposé de telle sorte que l'air aspiré par le capot (3) passe par le côté de la paroi arrière (2) qui est opposé à l'espace de préparation alimentaire (14).

2. Installation de filtrage selon la revendication 1, **caractérisée en ce qu'**un canal de refroidissement (8), reliant le dispositif d'aspiration (13) au capot (3), est disposé du côté de la paroi arrière (2) qui est opposé à l'espace de préparation alimentaire (14).

3. Installation de filtrage selon la revendication 2, **caractérisée en ce que** le dispositif d'aspiration (13) est disposé au-dessous de l'espace de préparation alimentaire (14).

4. Installation de filtrage selon la revendication 2 ou 3, **caractérisée en ce que** le canal de refroidissement (8) est disposé de telle sorte que l'air est guidé essentiellement dans une direction exclusivement perpendiculaire entre le capot (3) et le dispositif d'aspiration (13).

5. Installation de filtrage selon la revendication 3 ou 4, **caractérisée en ce que** le système de filtrage (13) est disposé au-dessous de l'espace de préparation alimentaire (14).

6. Installation de filtrage selon la revendication 5, **caractérisée en ce que** le dispositif d'aspiration et le système de filtrage (13) sont disposés dans un espace fonctionnel (5) sensiblement fermé.

7. Installation de filtrage selon l'une des revendications 1 à 6,**caractérisée en ce qu'**il est prévu un tiroir (4) destiné par exemple à recevoir du pain.

8. Installation de filtrage selon l'une des revendications 1 à 7, **caractérisée en ce que** le capot (3) comporte un filtre (10) de protection contre les flammes.

9. Installation selon l'une des revendications 1 à 8, **caractérisée en ce que** l'installation de filtrage est mobile.

10. Installation selon l'une des revendications 6 à 9, **caractérisée en ce que** l'espace fonctionnel (5) et la paroi arrière (2), y compris le canal de refroidissement (8), sont fixés l'un à l'autre de façon amovible.

11. Installation de filtrage selon l'une des revendications 6 à 10, **caractérisée en ce que** le capot (3) et la paroi arrière (2), y compris le canal de refroidissement (8), sont fixés l'un à l'autre de façon amovible.

12. Gril de Doner Kebab comportant un dispositif de chauffage qui comporte une surface pouvant être chauffée et placée sensiblement perpendiculairement, et un dispositif placé au voisinage du dispositif de chauffage et destiné à recevoir un aliment à griller, **caractérisé en ce que** le grill de Doner Kebab comporte une installation de filtrage selon l'une des revendications 1 à 11.

13. Procédé de filtrage de vapeurs de cuisson ou de rôtissage, qui sont générées lors de la cuisson ou du rôtissage d'aliments, dans lequel les vapeurs de cuisson ou de rôtissage sont guidées à l'aide d'un dispositif d'aspiration à travers un système de filtrage, **caractérisé en ce qu'**une surface chauffée par le dispositif de chauffage est refroidie à l'aide du flux d'air aspiré.
